# EUROPEAN PATENT APPLICATION

(11) **EP 4 280 091 A1**
(43) Date of publication of application: **22.11.2023**
(21) Application number: 23174243.8
(22) Date of filing: 19.05.2023
(51) Int. Cl.: G06F 21/55, G06F 21/57, H04L 9/40

(54) **METHOD AND SYSTEM FOR MANAGING COMPUTER INCIDENTS IN A COMPUTER SYSTEM**

(30) Priority: 20.05.2022 IT 202200010514
(71) Applicant: Unicredit S.p.A., 20154 Milano (IT)
(72) Inventor: TONELLA, Daniele, Milano (IT); CONTE, Antonio, Milano (IT); FERRETTI, Francesca, Milano (IT); GOITU, Eugeniu, Milano (IT); LOMBARDO, Giovanni, Milano (IT)
(74) Representative: De Ros, Alberto

(57) **Abstract**

The method (200) serves to manage computer incidents linked to an application in a computer system, and comprises the steps of: a) constructing (220) a knowledge graph of the computer system based on a predetermined ontology, b) selecting (230) by traversing said knowledge graph computer incident linked to said application in a time interval, and constructing a past time series of incidents, c) determining (240) from said past time series of incidents a future time series of incidents based on a statistical analysis, d) making (250) a comparison of a trend of said future time series of incidents with respect to a trend of said past time series of incidents taking into account a variability of said past time series of incidents, and) on the basis of said comparison deciding (260) whether said application is safe or risky and consequently reporting said application; the ontology-based knowledge graph allows to store in an integrated way not simply data relative to incidents, but also connections between the data and semantics of the connections: in addition, constructing a knowledge graph starting from nonhomogeneous data and/or information allows a homogeneous processing despite the non-homogeneity of starting data and/or information.

## Description

### FIELD OF THE INVENTION

The present invention concerns a method and a system for managing computer incidents in a computer system.

### BACKGROUND OF THE INVENTION

Computer incidents in computer systems are relatively frequent and can have very serious consequences.

In (relatively) simple computer systems, incident management can be done manually through specialized personnel, dealing with each incident as it occurs based on the incident that occurred.

In (very) complex computer systems, such as for example the one of a bank or insurance company, managing computer incidents manually and extemporaneously is risky, in particular it does not guarantee complete monitoring of the system, and it is not optimal, in particular it does not allow to highlight all the computer risks linked to the system.

A further difficulty related to the (very) complex computer systems is that data and/or information (i.e. aggregations and/or pre-processing of data) related to the system and incidents are often collected automatically, but from a plurality of different software systems that are disconnected from one another and that provide different and non-homogeneous outputs.

### SUMMARY

General aim of the present invention is to provide a method for managing computer incidents in a computer system suitable for complex and very complex computer systems. The ultimate object is to prevent the incidents and thereby to mitigate the cyber risk.

Since the diversity in the sources is typical and the non-homogeneity of the data and information to be used as input for incident management is typical, the management method must be able to take this into account both during the data and/or information collection step and during the collected data and/or information processing step.

It is desirable that the method disregards the cause of the incidents so that it can be easily applied to any computer system.

It is also desirable that the method can easily adapt to the evolution of the computer system for example in terms of applications and/or platforms and/or hosts that compose it.

Obviously, the method should be as accurate as possible in determining whether an application is at risk of a computer incident or not, particularly over a predetermined future time interval.

This general object as well as these and other more specific objects are achieved thanks to what is expressed in the appended claims which form an integral part of the present description.

The present invention requires the construction of a knowledge graph of the computer system. A knowledge graph of the computer system is based on a predetermined ontology and therefore it allows to store in an integrated way not simply data relative to incidents, but also connections between data and semantics of the connections.

The fact of constructing a knowledge graph from non- (strictly) homogeneous data and/or information, allows a homogeneous processing despite the non-homogeneity of starting data and/or information.

In addition, the fact of processing a knowledge graph allows on the one hand to use powerful (known) methods of graph processing and on the other hand to simultaneously process data and semantic relationships.

In general, thanks to such a knowledge graph, various analyses are possible.

### LIST OF FIGURES

The present invention will become more readily apparent from the detailed description that follows to be considered together with the accompanying drawings in which:
Fig. 1 shows a part of an ontology relevant to the realization of methods according to the present invention, and
Fig. 2 shows the flowchart of a method according to the present invention.

As can be easily understood, there are various ways of practically implementing the present invention which is defined in its main advantageous aspects in the appended claims and is not limited either to the following detailed description or to the appended claims.

### DETAILED DESCRIPTION

The present disclosure uses terminology typical of the computer sector.

However, for the sake of clarity, a brief terminological introduction is given.

Furthermore, the present description assumes that the person skilled in the art who reads it has knowledge relative to the complex computer systems (from the hardware point of view, but above all from the software point of view), such as for example that of a bank or an insurance company, as well as to the "graph database" or "knowledge graph" and to the "time series analysis".

In the present detailed description, "information" means aggregations and/or pre-processing of data.

"Application" means a computer program adapted to perform some task with the exclusion of the tasks linked to the operation of the computer itself (such as those performed by the operating system); of course, an application can perform more than one task. Typically, the tasks are those of interest to the end user, but can also be those linked to the client-server operation in which the end user is in any case the end subject concerned.

"Platform" means an environment in which one or more computer programs and, more generally, applications are executed. It is a very broad term that can comprise hardware (not to be confused with hardware as such - see the definition of "host" below) but more often it comprises software that allows such execution. "Host" means the hardware on which the applications are executed. It can, for example, be a server or a mainframe or a series of computers connected to each other. It should be noted that, for the purposes of the present invention, PCs (laptops and desktops) and the terminals are not taken into consideration.

"Process" means the instance of a computer program during its execution. In general, an application can lead to the instantiation of many processes and each process can give rise to one or more "threads"; the latter aspect is not considered by the present invention.

The present invention requires the construction of a knowledge graph of the computer system. A knowledge graph of the computer system is based on a predetermined ontology and therefore it allows to store in an integrated way not simply data relative to incidents, but also connections between data and semantics of the connections.

The fact of constructing a knowledge graph from non- (strictly) homogeneous data and/or information, allows a homogeneous processing despite the non-homogeneity of starting data and/or information.

In addition, the fact of processing a knowledge graph allows on the one hand to use powerful (known) methods of graph processing and on the other hand to simultaneously process data and semantic relationships.

In general, thanks to such a knowledge graph, various analyses are possible.

A graph of the computer system is based on a predetermined ontology.

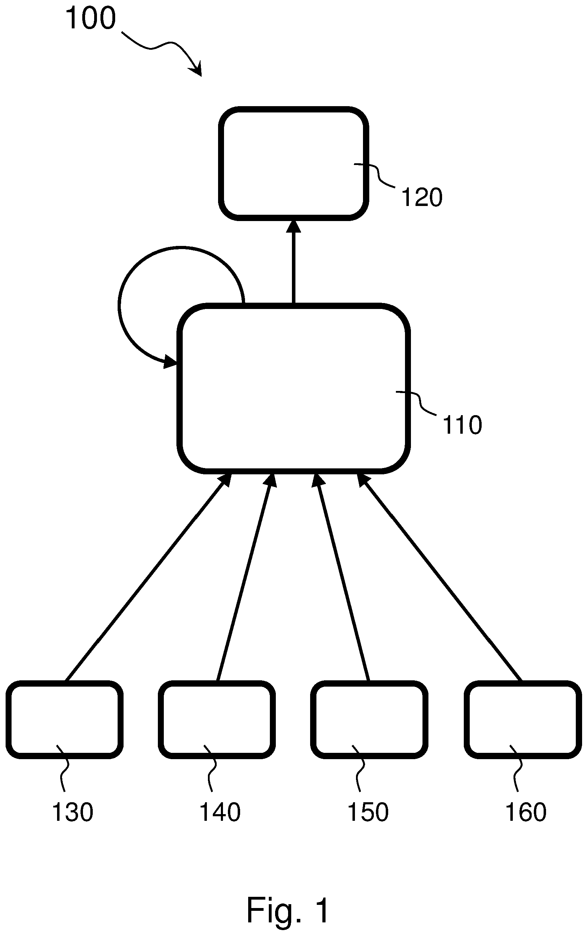

Such an ontology can involve many concepts, relationships and even preferably "topological measures" (among the concepts once they are instantiated). The (exemplary) diagram 100 shown in Fig. 1 is typically only a part of a possible overall ontology, the most relevant part for the present invention that is interested in analysing the risk of computer incidents related to its applications.

In Fig. 1 the following main concepts are represented:
∘ "incident" (110),
∘ "application" (130) which is connected to the concept of "incident" through an "It had an incident" relationship,
∘ "category" (120) which is connected to the concept of "incident" through an "It belongs to category" relationship,
∘ "platform" (140) which is connected to the concept of "incident" through an "It had an incident" relationship,
∘ "host" (150) which is connected to the concept of "incident" through an "It had an incident" relationship,
∘ "process" (160) which is connected to the concept of "incident" through an "It had an incident" relationship.

It should be noted that a relationship enclosing the concept of incident is very useful and represents the possibility that an incident is linked, more specifically motivated or caused, by a previous incident.

It should be noted that the present invention focuses on the so-called "minor" incidents, i.e. on the incidents that do not have a direct impact on the end "clients" (e.g. of the bank or insurance company) and that are not to be confused with the "operators" (e.g. of the bank or insurance company whether they are involved in "production" or IT services). In fact, the objective is to "keep under control", that is to predict and avoid "minor" incidents to try to completely avert "major" incidents, that is, on the incidents that have a direct impact on the end "clients"

(for example, of the bank or insurance company), for example if a client fails to make a wire transfer through the home-banking service or to withdraw money from an ATM counter is to be considered as a "major" incident.

The concept of "incident" may have one or more of the following attributes (but others are not excluded) - the names given below are to be considered purely exemplary:
- "lastSeenTimestamp" : this attribute indicates the "time" in which the last update of the incident refers, in a simplified way it can be said that it is the "time" when the incident occurred,
- "updatedBy" : this attribute indicates the "operator" in which the last update of the incident is attributed, in a simplified way it can be said that it is the "operator" who took care of the incident, that is, who took charge of the "ticket" of the incident,
- "ticketType" : this attribute indicates the type of incident,
- "majorinc" : this attribute indicates if the incident is "major",
- "riskToMajor" : this attribute indicates the risk that the "minor" incident can lead to a "major" incident,
- "openTime" : this attribute indicates the "time" when the "ticket" was opened, in some ways it can be considered as the "instant of time" when the incident occurred and began,
- "closeTime" : this attribute indicates the "time" when the "ticket" was closed, in some ways it can be considered as the "instant of time" when the incident is over,
- "durationSec" : this attribute indicates how long the "ticket" has remained open, in some ways it can be considered as the "duration of time" during which the incident lasted,
- "fixType" : this attribute indicates the type of solution that was used to solve the incident,
- "priority" : this attribute indicates the priority that was assigned to the incident resolution,
- "severity" : this attribute indicates the risk that the incident will have consequences on systems other than the one in which it occurred,
- "criticality" : this attribute indicates the "internal" criticality, i.e. the number of operators involved (or who may be involved) in the incident,
- "impact" : this attribute indicates the "external" criticality, i.e. the number of clients involved (or who may be involved) in the incident, i.e. the impact on clients and therefore on the business.

The concept of "incident" may have one or more of the following "topological measures" (but others are not excluded) - the names given below are to be considered purely exemplary:
- "community" : this measure indicates the similarity among incidents
- "score" : this measure indicates the correlation or interference among incidents

The concept "category" may have one or more of the following attributes (but others are not excluded) - the names given below are to be considered purely exemplary:
- "lastSeenTimestamp" : this attribute indicates the "time" to which the last update of the category refers
- "updatedBy" : this attribute indicates the "operator" to which the last update of the category is attributed

The concept "category" may have one or more of the following "topological measures" (but others are not excluded) - the names given below are to be considered purely exemplary:
- "community" : this measure indicates the similarity among categories of incidents
- "score" : this measure indicates the correlation or interference among categories of incidents

As said, the present invention requires the construction of a knowledge graph of the computer system based for example on the ontology of Fig. 1; this graph is adapted to store (at least) data and/or information relative to computer incidents. The construction of the knowledge graph envisages instantiating at least the "incidents" with relative concept attributes (including at least one time data relative to the incident: for example: when it occurred and/or when it began and/or when it ended and/or when it was detected and/or when the beginning was detected and/or when the end was detected) and preferably with relative topological measures based on data and/or information received from a software system that produces data and/or information relative to incidents in the computer system. There are currently on the market (or used in banks and/or insurance companies) software systems of this kind, such as for example "Jira", "ServiceNow" and "HPSM".

In addition, the construction of the knowledge graph may envisage instantiating at least the "incidents" based on data and/or information received from other software systems that produce data and/or information relative to the computer system, in particular:
- a software system that produces data and/or information relative to the master data of the applications of the computer system - there are currently on the market (or used in banks and/or insurance companies) software systems of this kind, such as software for the so-called "IT Asset Management",
- a software system that produces data and/or information relative to the deployment of the applications in the computer system - there are currently on the market (or used in banks and/or insurance companies) software systems of this kind, such as software for the so-called "IT Asset Management" and/or the software for the so-called "Application Performance Monitoring",
- a software system that produces data and/or information relative to the mapping of the applications on the hosts of the computer system - there are currently on the market (or used in banks and/or insurance companies) software systems of this kind, such as software for the so-called "Application Performance Monitoring".

As said, the present invention serves to manage computer incidents linked to applications in a computer system. In particular, it serves to report risky applications, i.e. those that are at risk of a computer incident in the future. Typically, the risk is assessed in a predetermined future time interval, for example one week or one month.

In the simplest cases, the report can correspond, for example, to displaying the name of the application at risk, or to displaying the name of the application at risk in red instead of in black within a list, or to displaying the symbol of the application at risk in red instead of in black within a map.

In addition or alternatively, the report may correspond, for example, to sending an electronic message to one or more computer processes and/or an electronic message (e.g. e-mail) to one or more people.

According to the present invention, it can advantageously be envisaged, in the case of an application rated to be at risk, to subject it to monitoring, or rather to a particular monitoring in addition to what could normally already be envisaged for the applications of a complex computer system.

This (further) monitoring could be active, that is, it could be carried out through the activity of a computer program. For example, one could open, in particular automatically, a window on a computer screen and display in said window the activity of the application rated to be at risk.

Such (further) monitoring could comprise, in particular, automatically activating in the computer system at least one software "probe" adapted to detect the operation of the process or of the processes involved in the realization of the application rated to be at risk. This "probe" could already be installed in the system or it could be installed only as needed. This "probe" could be adapted to report if and when the operation of one (or more) of these processes, i.e. the operation of the application rated to be at risk, becomes abnormal and therefore an incident has occurred or is about to occur shortly (for example within an hour or a minute).

The analysis object of the present invention concerns at least one application, but, typically, more than one application; in this case, the steps of the method are repeated for each of the applications. One could consider all or many of the applications present in a computer system; in the second case, one can focus, for example, on the most important or most critical applications.

The present invention has two closely related aspects: a method aspect and a system aspect. In both cases, reference is made to one or more of the existing and active applications, and therefore already object of "deployment", in the computer system considered.

The method aspect is incorporated in at least one computer program, i.e. software, which automatically performs a series of operations; depending on how the present invention is put into practice, it is not excluded that such a program has the possibility or need to interact with a human being, whom we can call "operator".

The system aspect is incorporated in a hardware comprising at least such software. It should be noted that such hardware could, in itself, be already part of the computer system considered (i.e. the implementation of the present invention could not require the addition of hardware to the computer system), and therefore the novelty could correspond to software stored in its memory and ready to be activated.

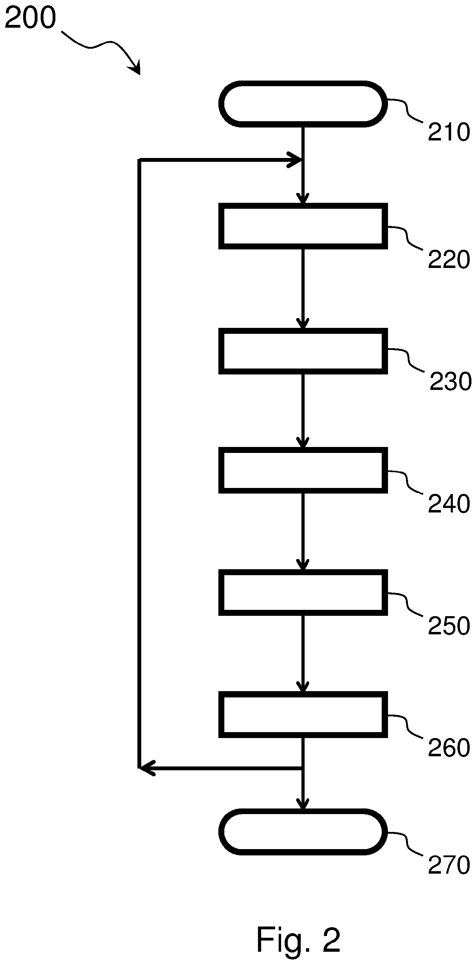

The following description can be more easily understood with the aid of the appended Fig. 2 showing a flowchart 200 of a method according to the present invention. Such a flowchart has a start block 210 and an end block 270. According to the present invention, there is a preliminary step, step "a" (see block 220 in Fig. 2), which envisages constructing a knowledge graph of the computer system based on a predetermined ontology, for example the ontology of Fig. 1 described above. As already said the diagram 100 shown in Fig. 1 is typically only a part of the overall ontology, i.e. the most relevant part for the present invention. As already explained, the construction of the knowledge graph typically comprises instantiating at least "incidents" with relative concept attributes (including at least one time data relative to the incident; with reference to the example it could be "openTime" and/or "closeTime") and preferably with relative topological measures based on data and/or information received from a software system that produces data and/or information relative to incidents in the computer system. In particular, as already explained, the instantiation of the "incidents" can be carried out based on data and/or information received from other software systems that produce data and/or information relative to the computer system. Subsequently, in general, step "b" (see block 230 in Fig. 2), step "c" (see block 240 in Fig. 2), step "d" (see block 250 in Fig. 2), and step "w" (see block 260 in Fig. 2) follow.

Step "b" envisages selecting, by traversing the previously constructed knowledge graph, computer incidents linked to the application considered in a time interval comprised between an initial time and a final time, and constructing a past time series of incidents. The final time is preferably the present time, i.e. the time at which the risk assessment of the application is being carried out; alternatively, it may be decided to neglect the most recent incidents, for example those relative to last week because they are still under analysis and/or resolution. The initial time may be indeterminate in the past or at a certain time distance in the past starting from the present time, deciding that the incidents older than for example two years are not relevant.

Step "c" envisages determining from the past time series of incidents a future time series of incidents based on a predetermined statistical analysis, in particular of the "time series analysis" type (an analysis well known to those skilled in the art), applied to the past time series of incidents. "Future time series" means at least two numerical values, each of which is to be understood as the number of incidents that are expected/envisaged in a future time interval; for example, the number of incidents expected/envisaged during the next day or week or month and the number of incidents expected/envisaged during the following day or week or month. As a borderline case, one can also include the time series that includes only one numerical value when referred to a very precise future time interval; this single future value could be combined at least with a present value and/or with a past value (for example the most recent one). It should be noted that any of these numbers that can be understood as an average value of the probability can be associated with other numerical values, for example the probability variance. Note that the processing of step "c" can be done separately for each host or globally for all hosts. In other words, in relation to the same application considered, one could statistically determine future time series of incidents separately for each host and then add them together obtaining a single future time series of incidents (in this case, for the same application, a slightly different statistical model is assumed for each host), or one could directly determine a single future time series of incidents (in this case, for the same application, the same statistical model is assumed for all hosts).

Step "d" generally envisages making a comparison of a trend of the future time series of incidents with respect to a trend of the past time series of incidents taking into account a variability of the past time series of incidents; more details will be illustrated below. Obviously, the trends of the time series must be determined beforehand; the "time series analysis" science provides useful teachings in this regard.

Step "e" envisages deciding, based on the comparison of step "d", whether the application is safe or risky (obviously this is a judgement or evaluation based on statistics, and not a deterministic determination) and consequently reporting the application typically only if at risk.

Preferably, the determination in step "c" takes more account of the recent computer incidents. In particular, this analysis is based on "Exponential Moving Average".

Preferably, the determination in step "c" takes into account the computer incidents as a function of the number of users involved in the incident. In particular, such analysis associates a weight to an incident as a function of the number of users involved in the incident; preferably, the weight can take on a predetermined number of values, for example "low weight" (low number of users involved) and for example "average weight" (average number of users involved) and for example "high weight" (high number of users involved). The number of users involved (or who may be involved) is a piece of information that can be received by an external software system; category attribution (e.g., "low" and "average" and "high") can be performed by the external software system on the basis of predetermined criteria.

Typically, the determination in step "c" envisages that the future time series of incidents covers a predetermined time interval, for example one week or one month or one quarter; preferably, this time interval does not have to be too long (for example one week or one month) for the assessment to be reliable. Advantageously, the statistical analysis in step "c" comprises the use of "Support Vector Regression".

Advantageously, step "d" comprises calculating the difference between a first percentile of the trend of the future time series and a second percentile of the trend of the past time series. Preferably, the percentage relative to the first percentile is greater than the percentage relative to the second percentile; in particular, the percentage relative to the first percentile is comprised between 70 and 80 and is preferably 75, and the percentage relative to the second percentile is comprised between 40 and 60 or between 45 and 55 and is preferably 50.

Advantageously, step "d" comprises calculating the ratio of the above percentile difference to the absolute median deviation of the trend of the past time series; in this way, the percentile difference is "normalized" with respect to the variability of the past time series. Preferably, the absolute median deviation covers a time interval less than the interval comprised between said initial time and said final time; for example, the absolute median deviation only relative to the last month is considered even if the observation time interval is one quarter or one year or greater than one year; in other words, the recent variability of the incidents of the application considered is taken into account more.

Advantageously, in step "d" a comparison is made between the above ratio and a predetermined number or a threshold, in particular preferably 1; consequently, in step "e" it is decided that the application considered is safe if said ratio is lower than the predetermined number or risky if said ratio is higher than the predetermined number. Alternatively, two predetermined numbers can be used, i.e. a lower threshold (e.g. 0.9 or 0.8) and an upper threshold (e.g. 1.1 or 1.2); if this ratio is lower than the lower threshold the application considered is safe and if this ratio is higher than the upper threshold the application considered is risky; in this way, a greater assessment confidence can be provided; however, it remains to be decided what to do if this ratio is comprised between the lower threshold and the upper threshold.

What is described above refers to the operations, in particular the operations referred to in steps from "a" to "e", which can be carried out to what has been called the "present time". Typically, these may be repeated at a distance of time, for example periodically, for example once a week or once a month or once a quarter, and they may concern the following week or the following month or the following quarter, respectively. As far as the construction of the knowledge graph is concerned, this can be done each time from scratch or done incrementally, for example taking into account incidents that occurred in the previous period, but also possibly new "hosts" and/or "processes" and/or "platforms" and, possibly, new "categories of incidents".

A useful and advantageous aspect of the present invention is the so-called "machine learning", as illustrated below.

Advantageously, the statistical model used in the statistical analysis of step "c" is modified, typically only updated, repeatedly, for example periodically, based on the difference between a previously determined future time series and an actual time series; this difference can only be evaluated in terms of trend, that is, the difference between the trend predicted for a certain period and the trend that actually occurred in that period.

Advantageously, the statistical model used in the statistical analysis of step "c" is modified, typically only updated, repeatedly, for example periodically, based on the repeated calculation of "precision" and/or "recovery" parameters relative to safety/riskiness of the application considered. In this case, "precision" means the ratio of "true_positives" to the sum of "true_positives" and "false_positives," and "recovery" means the ratio of "true_positives" to the sum of "true_positives" and "false_negatives."

Advantageously, one or more of the mathematical formulas used to perform step "d" can be modified, typically only updated, one or more times during the operation of the computer system to optimize risk assessment.

## Claims

1. Method (200) for managing computer incidents linked to an application in a computer system, comprising the steps of:
a) preliminarily constructing (220) a knowledge graph of the computer system based on a predetermined ontology (100), wherein said knowledge graph is adapted to store data and/or information relative to computer incidents, wherein said predetermined ontology (100) comprises at least the following concepts:
∘ "incident" (110),
∘ "application" (130) which is connected to the concept of "incident" through an "It had an incident" relationship,
∘ "category" (120) which is connected to the concept of "incident" through an "It belongs to category" relationship,
∘ "platform" (140) which is connected to the concept of "incident" through an "It had an incident" relationship,
∘ "host" (150) which is connected to the concept of "incident" through an "It had an incident" relationship,
∘ "process" (160) which is connected to the concept of "incident" through an "It had an incident" relationship;
wherein constructing said knowledge graph comprises instantiating at least "incidents" with relative concept attributes including at least one time data relative to the incident, based on data and/or information received from a software system that produces data and/or information relative to incidents in said computer system;
and subsequently of:
b) selecting (230) by traversing said knowledge graph computer incidents linked to said application in a time interval comprised between an initial time and a final time, the final time being preferably the present time, and constructing a past time series of incidents,
c) determining (240) from said past time series of incidents a future time series of incidents based on a predetermined statistical analysis, in particular of the "time series analysis" type, applied to said past time series of incidents,
d) making (250) a comparison of a trend of said future time series of incidents with respect to a trend of said past time series of incidents taking into account a variability of said past time series of incidents,
e) on the basis of said comparison deciding (260) whether said application is safe or risky and consequently reporting said application.

2. Method (200) according to claim 1, wherein in step "a" "incidents" are also instantiated with relative topological measures.

3. Method (200) according to claim 2, wherein the construction of the knowledge graph in step "a" comprises instantiating at least "incidents" based on data and/or information received from other software systems that produce data and/or information relative to said computer system, in particular:
- a software system that produces data and/or information relative to the master data of the applications in said computer system,
- a software system that produces data and/or information relative to the deployment of applications in said computer system,
- a software system that produces data and/or information relative to the mapping of applications on the hosts in said computer system.

4. Method (200) according to claim 1, wherein if said application is risky subjecting it to monitoring.

5. Method (200) according to claim 4, wherein said monitoring comprises activating in said computer system at least one software probe adapted to detect operation of said application.

6. Method (200) according to any one of the preceding claims, wherein the determination in step "c" takes more account of recent computer incidents, in particular the statistical analysis is based on "Exponential Moving Average".

7. Method (200) according to any one of the preceding claims, wherein the determination in step "c" takes into account the computer incidents as a function of the number of users involved in the incident, in particular it associates a weight to an incident as a function of the number of users involved in the incident, preferably said weight being able to assume a predetermined number of values.

8. Method (200) according to any one of the preceding claims, wherein the determination in step "c" provides that the future time series of incidents covers a predetermined time interval.

9. Method (200) according to any one of the preceding claims, wherein the statistical analysis in step "c" comprises the use of "Support Vector Regression".

10. Method (200) according to any one of the preceding claims, wherein step "d" comprises calculating the difference between a first percentile of said trend of said future time series and a second percentile of said trend of said past time series.

11. Method (200) of claim 10, wherein the percentage relative to said first percentile is greater than the percentage relative to said second percentile, wherein the percentage relative to said first percentile is preferably comprised between 70 and 80, wherein the percentage relative to said second percentile is preferably 50.

12. Method (200) according to claim 10 or 11, wherein step "d" comprises calculating the ratio of said difference to the absolute median deviation of said trend of said past time series.

13. Method (200) according to claim 12, wherein said absolute median deviation covers a time interval less than the interval comprised between said initial time and said final time.

14. Method (200) according to claim 12 or 13, wherein in step "d" the comparison is made between said ratio and a predetermined number, said predetermined number being preferably 1, wherein in step "e" it is decided that said application is safe if said ratio is lower than said predetermined number or risky if said ratio is higher than said predetermined number.

15. Method (200) according to any one of the preceding claims, wherein at least steps "a" to "e" are repeatedly carried out at a distance of time.

16. Method (200) according to claim 15, wherein a statistical model used in said statistical analysis of step "c" is repeatedly modified based on the difference between a previously determined future time series and an actual time series.

17. Method (200) according to claim 15, wherein a statistical model used in said statistical analysis of step "c" is repeatedly modified based on the repeated calculation of "precision" and/or "recovery" parameters relative to safety/riskiness of said application in said computer system.

18. Method (200) according to any one of the preceding claims, wherein one or more mathematical formulas used to carry out step "d" are modified one or more times during the operation of the computer system to optimise the risk assessment.

19. System for managing computer incidents linked to applications in a computer system, comprises at least one computer program adapted to carry out the method according to any one of the preceding claims for one or more of the existing and active applications in said computer system.
